## Europäisches Patentamt

## European Patent Office

## Office européen des brevets

(19)

(11) Veröffentlichungsnummer: **0 242 657**
**B1**

(12) **EUROPÄISCHE PATENTSCHRIFT**

(45) Veröffentlichungstag der Patentschrift:
**25.10.89**

(51) Int. Cl.⁴: **F16D 23/12,** F16D 25/08,
G05G 3/00

(21) Anmeldenummer: **87104857.5**

(22) Anmeldetag: **02.04.87**

(54) **Lagerung eines Kupplungshebels an Kraftfahrzeugen.**

(30) Priorität: **12.04.86 DE 3612419**

(43) Veröffentlichungstag der Anmeldung:
**28.10.87 Patentblatt 87/44**

(45) Bekanntmachung des Hinweises auf die Patenterteilung:
**25.10.89 Patentblatt 89/43**

(84) Benannte Vertragsstaaten:
**DE ES FR GB IT**

(56) Entgegenhaltungen:
**DE-A- 3 411 641**
**FR-A- 2 531 511**
**GB-A- 308 024**
**GB-A- 539 689**
**GB-A- 1 000 586**
**GB-A- 1 078 210**
**US-A- 2 321 513**
**US-A- 2 624 437**
**US-A- 4 186 828**

(73) Patentinhaber: **INA Wälzlager Schaeffler KG,
Industriestrasse 1-3 Postfach 1220,
D-8522 Herzogenaurach(DE)**

(72) Erfinder: **Parzefall, Walter, Kettelerstrasse 1,
D-8526 Bubenreuth(DE)**

(74) Vertreter: **Klug, Horst, Dipl.-Ing. (FH), c/o INA Wälzlager
Schaeffler KG Postfach 12 20,
D-8522 Herzogenaurach(DE)**

ACTORUM AG

## Beschreibung

Die Erfindung betrifft die Lagerung eines Kupplungshebels an Kraftfahrzeugen, der sich einerseits an einem Schwenkpunkt abstützt, der durch einen Abstützbolzen mit sphärischem Kopf gebildet ist, der in eine entsprechende Kalotte des Kupplungshebels eingreift und an dem andererseits Betätigungsmittel angreifen, und der auf ein Kupplungsausrücklager einwirkt, welches auf einem Führungsrohr längsverschiebbar angeordnet ist, welches koaxial zur Achse einer Reibungskupplung verläuft.

Während man früher derartige Kupplungshebel um einen Bolzen schwenkbar lagerte, ist man in jüngerer Zeit aus verschiedenen Gründen, insbesondere wegen der einfacheren Montierbarkeit dazu übergegangen, den Schwenkpunkt dadurch zu bilden, daß ein Abstützbolzen mit sphärischem Kopf vorgesehen wurde, der in eine entsprechende Kalotte des Kupplungshebels eingreift (DE-A 3 411 641). Neben den so erzielten Vorteilen treten jedoch bei diesen Kupplungshebeln auch Nachteile auf, die hauptsächlich dadurch bedingt sind, daß derartige Kupplungshebel auch um eine Längsachse schwenken können, die durch den Schwenkpunkt einerseits und den Angriffspunkt der Betätigungsmittel andererseits geht.

In modernen Reibungskupplungen werden häufig Tellerfedern verwendet, an deren frei auskragenden Zungen das Kupplungsausrücklager angreift. Aus Fertigungsgründen liegen die Enden der Federzungen nicht immer exakt in einer rechtwinklig zur Kupplungsachse verlaufenden Ebene, so daß diese Federzungen dem an ihnen anliegenden Kupplungsausrücklager eine Taumelbewegung aufzuzwingen versuchen. Die so auf das Kupplungsausrücklager einwirkenden Vibrationen setzen sich auf den Kupplungshebel fort, wodurch zwischen diesem und seinen Anlageflächen an dem Kupplungsausrücklager kleine Schläge mit hoher Frequenz ausgeübt werden. Da in modernen Kraftfahrzeugen die Kupplungsausrücklager durch den Ausrückhebel ständig mit einer geringen Vorlast gegen die Tellerfederzungen gedrückt werden, so daß das Kupplungsausrücklager ständig umläuft, liegt diese rüttelnde Beanspruchung ununterbrochen während der ganzen Betriebsdauer des Kraftfahrzeuges vor. Besonders nachteilig wirkt sich diese Beanspruchung dann aus, wenn das Gehäuse des Kupplungsausrücklagers aus Kunststoff besteht, was aus Gewichtsgründen neuerdings meistens der Fall ist. In diesen Fällen kann man feststellen, daß die rüttelnde und schlagende Relativbewegung zwischen dem Kupplungshebel und dem Gehäuse des Kupplungsausrücklagers sehr schnell zur Beschädigung und oft zur Zerstörung des letzteren führt.

Es ist die Aufgabe der Erfindung durch eine konstruktiv und herstellungsmäßig einfache Maßnahme die Lagerung des Kupplungshebels so zu verbessern, daß die schädlichen Schwingungen vermieden, oder doch wenigstens weitestgehend gedämpft werden.

Dieses Ziel erreicht die Erfindung dadurch, daß am Schwenkpunkt ein Dämpfungselement aus polymerem Werkstoff vorgesehen ist, mit dem Schwingungen des Kupplungshebels um eine durch den Schwenkpunkt einerseits und den Angriffspunkt der Betätigungsmittel andererseits gehende Längsachse vermieden bzw. gedämpft werden.

Der Abstützbolzen weist dabei im Abstand von dem sphärischen Kopf einen Radialflansch auf, an dem sich das Dämpfungselement abstützt, das andererseits an wenigstens zwei Stellen des Kupplungshebels anliegt, die auf einer durch den Schwenkpunkt gehenden und rechtwinklig zur Längsachse des Kupplungshebels und der Achse der Kupplung verlaufenden Geraden liegen. Es versteht sich dabei, daß die Gerade nicht exakt durch den Schwenkpunkt verlaufen muß, sondern auch parallel zu einer solchen Geraden versetzt sein kann. In jedem Falle wird durch diese einfache Maßnahme erreicht, daß der Kupplungshebel dann nur noch in einer, sowohl die Kupplungsachse als auch den Schwenkpunkt enthaltenden Ebene schwenken kann, während schädliche Schwingungen um seine Längsachse ausgeschlossen sind.

Auf konstruktiv einfachste Weise läßt sich dieses Ziel dadurch erreichen, daß das Dämpfungselement kreisringförmig ausgebildet ist und an zwei wulstförmig vorspringenden Stellen des Kupplungshebels anliegt.

Das Dämpfungselement kann aber auch so ausgeführt sein, daß es sich einerseits mit einer Kreisringfläche an dem Radialflansch abstützt und andererseits mit zwei einander diametral gegenüberliegenden Vorsprüngen bzw. Ausnehmungen mit entsprechend ausgebildeten Ausnehmungen bzw. Vorsprüngen des Kupplungshebels in Kontakt steht. Durch das Ineinandergreifen dieser Vorsprünge und Ausnehmungen ist gleichzeitig das Dämpfungselement in seiner Lage gegenüber dem Kupplungshebel so festgelegt, daß es sich nicht verdrehen kann.

Andererseits ist es auch möglich, das Dämpfungselement am Kupplungshebel anzuordnen und mit zwei einander diametral gegenüberliegenden Vorsprüngen an dem Radialflansch des Abstützbolzen anliegen zu lassen. Eine solche Ausführung hat den Vorteil, daß das Dämpfungselement schon vor dem Einbau des Kupplungshebels mit diesem verbunden werden kann, so daß es später nicht vergessen werden kann.

Während bei den bisher beschriebenen Ausführungen das Dämpfungselement als zusätzliches Teil zu dem - in der Regel metallischen - Abstützbolzen vorgesehen war, ist es im Rahmen der Erfindung auch möglich, das Dämpfungselement selbst gleichzeitig zur Abstützung des Kupplungshebels zu verwenden. In diesem Falle ist der Schwenkpunkt durch ein Teil aus polymerem Werkstoff gebildet, welches mit einem Vorsprung bzw. einer Ausnehmung formschlüssig mit einer entsprechenden Ausnehmung bzw. einem entsprechenden Vorsprung des Kupplungshebels zusammenwirkt und welches den Kupplungshebel auf einer rechtwinklig zu seiner Längsachse liegenden Geraden beiderseits des eigentlichen Schwenkpunktes abstützt.

Um dabei zu verhindern, daß der Kupplungshebel seitlich abgleitet, kann das Teil aus polymerem Werkstoff an seiner dem Kupplungshebel zugewandten Seite einen zusätzlichen bolzenartigen Vorsprung aufweisen, der durch eine Durchbrechung des Kupplungshebels hindurchtritt.

In den Zeichnungen sind Ausführungsbeispiele der Erfindung dargestellt. Es zeigen:

Fig. 1 in einem teilweisen Längsschnitt die Gesamtanordnung eines eingebauten Kupplungshebels,
Fig. 2 einen Schnitt nach Linie II-II der Figur 1 und
Fig. 3 bis 12 weitere Ausführungsvarianten der Erfindung jeweils in zwei Schnitten.

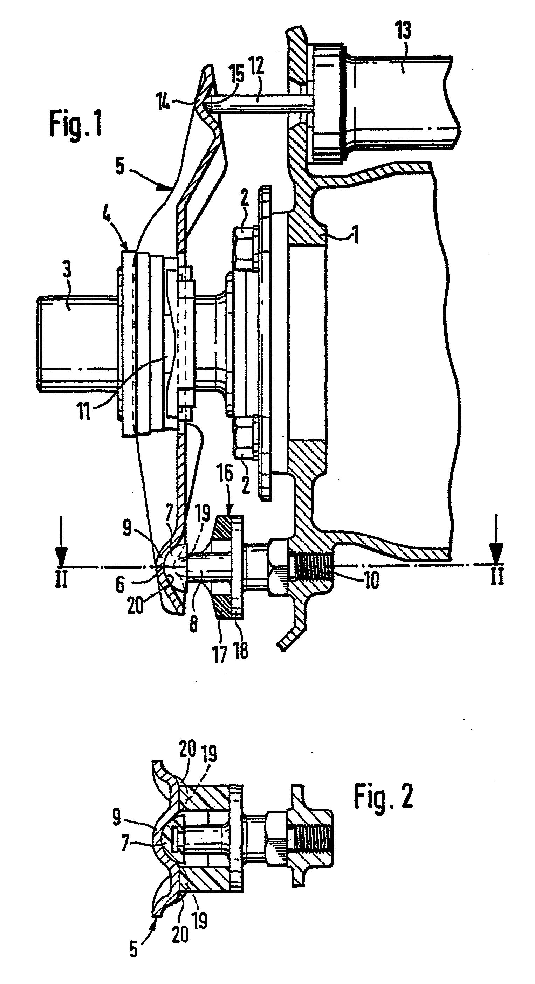

In Figur 1 ist mit 1 die Wand eines Getriebegehäuses bezeichnet, an die mittels der Schrauben 2 ein Führungsrohr 3 angeflanscht ist. Auf diesem Führungsrohr 3 ist ein Kupplungsausrücklager 4 längsverschieblich geführt. Durch Verschiebung nach links kann dieses Kupplungsausrücklager mit den Ausrückmitteln einer nicht dargestellten Reibungskupplung in Kontakt gebracht werden.

Die Längsverschiebung des Kupplungsausrücklagers 4 erfolgt durch den Kupplungshebel 5. Dieser ist dadurch um einen Schwenkpunkt 6 drehbar gelagert, daß der sphärische Kopf 7 eines Abstützbolzens 8 in eine Kalotte 9 des Kupplungshebels 5 eingreift. Der Abstützbolzen 8 ist mittels des Gewindes 10 in der Wand 1 des Getriebegehäuses befestigt.

An einem balligen Vorsprung 11 des Kupplungsausrücklagers 4 liegt der Kupplungshebel mit einer ebenen Fläche an. Am entgegengesetzten Ende des Kupplungshebels 5 greift der Stößel 12 eines hydraulischen Betätigungszylinders 13 ebenfalls in eine Kalotte 14 des Kupplungshebels 5 ein, wodurch dort ein Abstützpunkt 15 gebildet wird.

Um Schwingungen des Kupplungshebels 5 um eine gedachte Längsachse, die durch den Schwenkpunkt 6 einerseits und den Abstützpunkt 15 andererseits geht, zu verhindern, ist an dem Abstützbolzen 8 ein Dämpfungselement 16 vorgesehen, das sich einerseits mit einem Kreisring 17 an einem Radialflansch 18 des Abstützbolzens 8 abstützt und das andererseits mit Vorsprüngen 19 in Ausnehmungen 20 des Kupplungshebels 5 zu beiden Seiten der Kalotte 9 eingreift. Durch die Abstützung zwischen den Teilen 19 und 20 zu beiden Seiten des sphärischen Kopfes 7 sind Schwingungen des Kupplungshebels 5 um seine Längsachse vermieden oder doch wenigstens weitestgehend gedämpft.

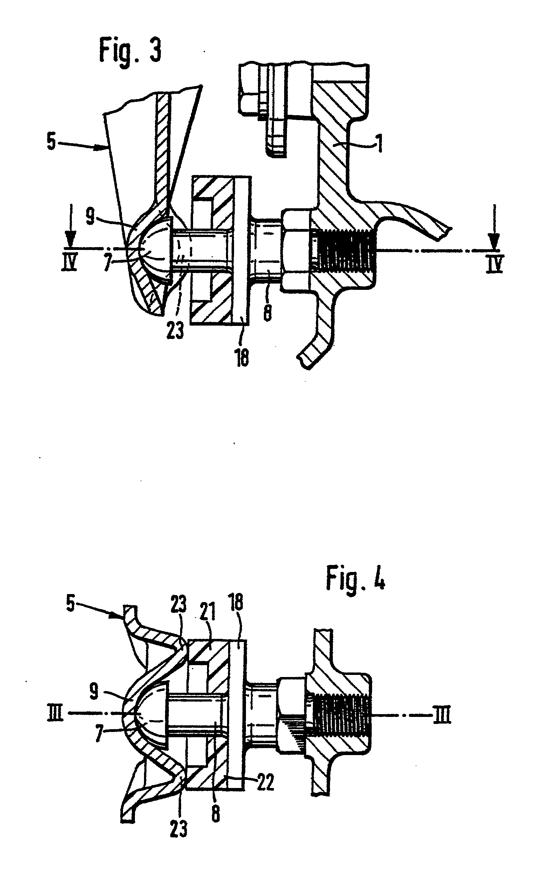

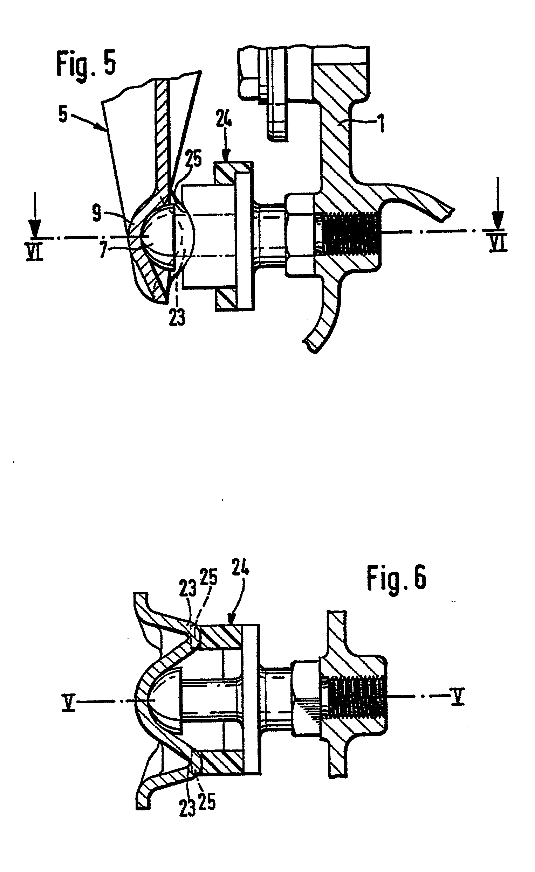

In den Figuren 3 und 4 ist eine Variante dargestellt, bei der sich ein kreisringförmiges Dämpfungselement 21, welches sich mit dem Ringflansch 22 auf dem Abstützbolzen 8 zentriert an dem Radialflansch 18 abstützt. An dem Kupplungshebel 5 sind beiderseits der Kalotte 9 wulstförmig vorspringende Stellen 23 vorgesehen, die sich an dem Dämpfungselement 21 abstützen.

Die in den Figuren 5 und 6 dargestellte Ausführung zeigt weitgehende Übereinstimmung mit der vorhergehenden. Das Dämpfungselement 24 weist dabei jedoch zusätzlich muldenförmige Ausnehmungen 25 auf, in die die wulstförmigen Stellen 23 des Kupplungshebels 5 formschlüssig eingreifen.

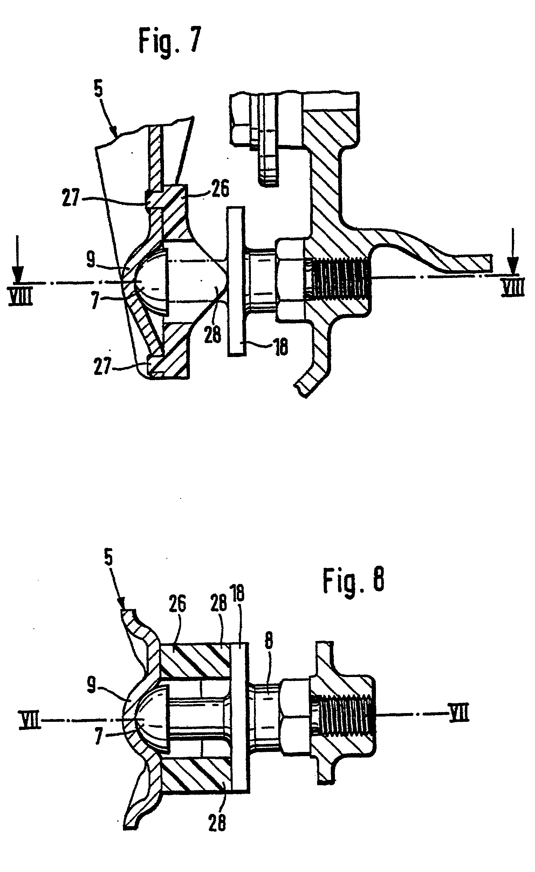

Im Gegensatz dazu unterscheidet sich die in den Figuren 7 und 8 dargestellte Ausführung von den vorhergehenden prinzipiell dadurch, daß hier ein Dämpfungselement 26 mittels nietartiger Verbindungen 27 am Kupplungshebel 5 befestigt ist und mit zwei einander diametral gegenüberliegenden Vorsprüngen 28 an dem Radialflansch 18 des Abstützbolzens 8 anliegt.

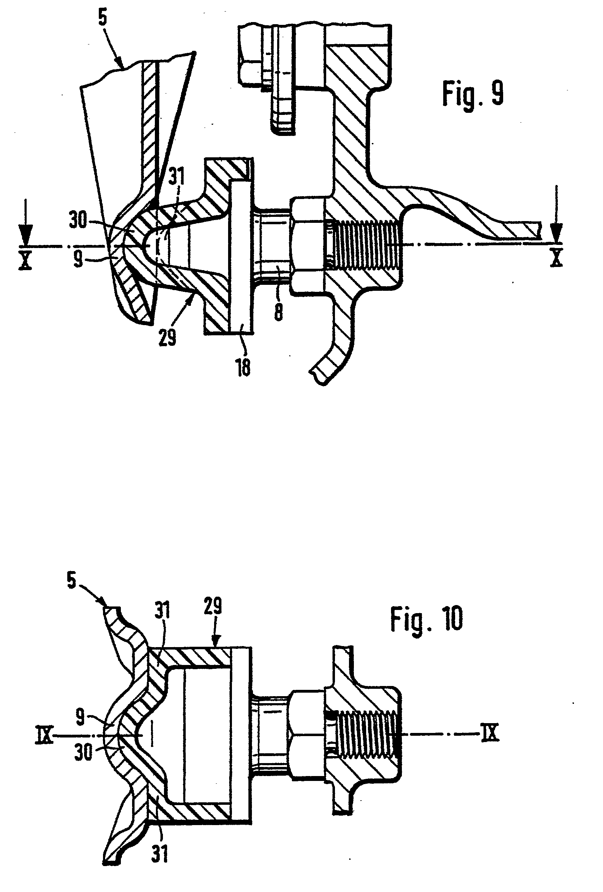

Die Figuren 9 und 10 zeigen eine Ausführung, bei der ein Dämpfungselement 29 auf einen Abstützbolzen 8 aufgesetzt ist und sich an dessen Radialflansch 18 abstützt. Der Abstützbolzen 8 trägt in diesem Falle keinen sphärischen Kopf, sondern dieser ist vielmehr ersetzt durch den sphärischen Vorsprung 30 des Dämpfungselementes 29, welcher in die Kalotte 9 des Kupplungshebels 5 eingreift. An diesen sphärischen Vorsprung 30 schließen sich beiderseits weitere Vorsprünge 31 an, die sich an ebenen Flächen des Kupplungshebels 5 abstützen.

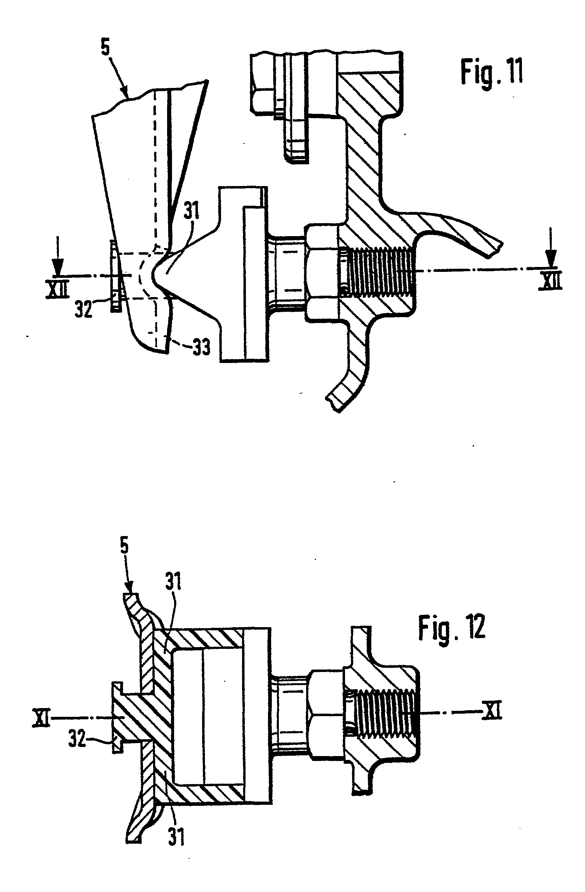

Die schließlich in den Figuren 11 und 12 dargestellte Ausführung unterscheidet sich von der vorhergehenden dadurch, daß sie sogar auf den sphärischen Vorsprung 30 verzichtet. Dieser Vorsprung 30 hatte die Aufgabe, ein seitliches Abwandern des Kupplungshebels 5 von dem Dämpfungselement 29 zu verhindern. Diese Aufgabe übernimmt im Falle der Figuren 11 und 12 ein bolzenartiger Vorsprung 32, der durch eine Durchbrechung 33 des Kupplungshebels 5 hindurchtritt.

## Patentansprüche

1. Lagerung eines Kupplungshebels (5) an Kraftfahrzeugen, der sich einerseits an einem Schwenkpunkt (6) abstützt, der durch einen Abstützbolzen (8) mit sphärischem Kopf gebildet (7) ist, der in eine entsprechende Kalotte (9) des Kupplungshebels (5) eingreift und an dem andererseits Betätigungsmittel (12, 13) angreifen, und der auf ein Kupplungsausrücklager (4) einwirkt, welches auf einem Führungsrohr (3) längsverschiebbar angeordnet ist, welches koaxial zur Achse einer Reibungskupplung verläuft, dadurch gekennzeichnet, daß der Abstützbolzen (8) im Abstand von dem sphärischen Kopf (7) einen Radialflansch (18) aufweist, an dem sich ein Dämpfungselement (16, 21, 24) aus polymeren Werkstoff abstützt, das andererseits an wenigstens zwei Stellen des Kupplungshebels (5) anliegt, die auf einer durch den Schwenkpunkt (6) gehenden und rechtwinklig zur Längsachse des Kupplungshebels (5) und der Achse der Kupplung verlaufenden Geraden liegen.

2. Lagerung nach Anspruch 1, dadurch gekennzeichnet, daß das Dämpfungselement (21) kreisringförmig ausgebildet ist und an zwei wulstförmig vorspringenden Stellen (23) des Kupplungshebels (5) anliegt.

3. Lagerung nach Anspruch 1, dadurch gekennzeichnet, daß sich das Dämpungselement (16, 21, 24) einerseits mit einer Kreisringfläche an dem Radialflansch (18) abstützt und andererseits mit zwei einander diametral gegenüberliegenden Vorsprüngen (19, 31) bzw. Ausnehmungen (25) mit entsprechend ausgebildeten Ausnehmungen (20) bzw. Vorsprüngen (23) des Kupplungshebels (5) in Kontakt steht.

4. Lagerung eines Kupplungshebels nach Anspruch 1, dadurch gekennzeichnet, daß das Dämpfungselement (26) am Kupplungshebel (5) befestigt ist und mit zwei einander diametral gegenüberliegenden Vorsprüngen (28) an einem Radialflansch (18) des Abstützbolzens (8) anliegt.

5. Lagerung eines Kupplungshebels (5) an Kraftfahrzeugen, der sich einerseits an einem Schwenkpunkt (6) abstützt und an dem andererseits Betätigungsmittel (12, 13) angreifen, und der auf ein Kupplungsausrücklager (4) einwirkt, welches auf einem Führungsrohr (3) längsverschieblich angeordnet ist, welches koaxial zur Achse einer Reibungskupplung verläuft, dadurch gekennzeichnet, daß der Schwenkpunkt durch ein Dämpfungselement (29) aus polymerem Werkstoff gebildet ist, welches mit einem Vorsprung (31) bzw. einer Ausnehmung formschlüssig mit einer entsprechenden Ausnehmung bzw. einem entsprechenden Vorsprung des Kupplungshebels (5) zusammenwirkt und welches den Kupplungshebel (5) auf einer rechtwinklig zu seiner Längsachse liegenden Geraden beiderseits des eigentlichen Schwenkpunktes abstützt.

6. Lagerung nach Anspruch 5, dadurch gekennzeichnet, daß das Dämpfungselement (29) an seiner dem Kupplungshebel (5) zugewandten Seite einen zusätzlichen bolzenartigen Vorsprung (32) aufweist, der durch eine Durchbrechung (33) des Kupplungshebels (5) hindurchtritt.

## Claims

1. Mounting of a clutch lever (5) on motor vehicles, the clutch lever being supported on one side at a pivot point (6) formed by a supporting bolt (8) with a spherical head (7) engaging into a corresponding concavity (9) in the clutch lever (5) and engaged on the other side by actuating means (12, 13), the clutch lever acting on a clutch release bearing (4) arranged for longitudinal displacement on a guide tube (3) extending coaxially to the axis of a friction clutch, characterised in that, at a distance from the spherical head (7), the supporting bolt (8) is provided with a radial flange (18) against which a damping element (16, 21, 24) made of polymeric material is supported, which damping element on the other side bears against the clutch lever (5) at least two points on a straight line which passes through the pivot point (6) and is at a right angle to the longitudinal axis of the clutch lever (5) and the axis of the clutch.

2. Mounting according to claim 1, characterised in that the damping element (21) is in the form of an annular ring and bears against two bead-like protrusions (23) on the clutch lever (5).

3. Mounting according to claim 1, characterised in that the damping element (16, 21, 24) is supported by means of an annular surface against the radial flange (18) on one side and on the other, has two projections (19, 31) or recesses (25) which are diametrically opposite to each other and through which it is in contact with corresponding recesses (20) or projections (23) respectively on the clutch lever (5).

4. Mounting of a clutch lever according to claim 1, characterised in that the damping element (26) is fixed on the clutch lever (5) and bears against a radial flange (18) on the supporting bolt (8) with two projections (28) which are diametrically opposite to each other.

5. Mounting of a clutch lever (5) on motor vehicles, the clutch lever being supported on one side at a pivot point (6) and engaged on the other side by actuating means (12, 13), the clutch lever acting on a clutch release bearing (4) arranged for longitudinal displacement on a guide tube (3) extending coaxially to the axis of a friction clutch, characterised in that the pivot point is formed by a damping element (29) of polymeric material, which positively co-operates through a projection (31) or a recess with a corresponding recess or a corresponding projection respectively on the clutch lever (5) and which supports the clutch lever (5) on both side of the actual pivot point on a straight line at a right angle to its longitudinal axis.

6. Mounting according to claim 5, characterised in that the damping element (29) has an additional bolt-like projection (32) on its side facing the clutch lever (5), which projection protrudes through an aperture (33) in the clutch lever (5).

## Revendications

1. Montage d'un levier d'embrayage (5) sur un véhicule automobile, le levier étant supporté d'un côté par un point de pivotement (6) formé par un goujon d'appui (8) à tête sphérique (7) s'engageant dans une calotte correspondante (9) du levier d'embrayage (5) et attaqué, de l'autre côté, par des moyens d'actionnement (12, 13), et agissant sur une butée de débrayage (4) montée à déplacement longitudinal sur un tube-guide (3) s'étendant coaxialement par rapport à l'axe d'un embrayage à friction, caractérisé en ce que le goujon d'appui (8) est pourvu, à une distance de la tête sphérique (7), d'une bride radiale (18) contre laquelle s'appuie un élément d'amortissement (16, 21, 24) en matière polymère, qui, de l'autre côté, est en contact avec le levier d'embrayage (5) en au moins deux endroits situés sur une ligne droite passant par le point de pivotement (6) et s'étendant à angle droit de l'axe longitudinal du levier d'embrayage (5) et de l'axe d'embrayage.

2. Montage suivant la revendication 1, caractérisé en ce que l'élément d'amortissement (21) est conformé en anneau circulaire qui s'appuie contre deux saillies en bourrelet (23) du levier d'embrayage (5).

3. Montage suivant la revendication 1, caractérisé en ce que l'élément d'amortissement (16, 21, 24) s'appuie d'un côté par une surface en forme d'anneau circulaire sur la bride radiale (18) et est, de l'autre côté, en contact par deux saillies (19, 31) ou deux évidements (25) diamétralement opposés avec des évidements correspondants (20) ou des saillies correspondantes (23) respectivement, du levier d'embrayage (5).

4. Montage d'un levier d'embrayage suivant la revendication 1, caractérisé en ce que l'élément d'amortissement (26) est fixé sur le levier d'embrayage (5) et s'appuie sur une bride radiale (18) du goujon d'appui (8) par deux saillies (28) diamétralement opposées.

5. Montage d'un levier d'embrayage (5) sur un véhicule automobile, le levier étant supporté d'un côté sur un point de pivotement (6) et attaqué de l'autre côté par des moyens d'actionnement (12, 23), et agissant sur une butée de débrayage (4) montée à déplacement longitudinal sur un tube-guide (3) s'étendant coaxialement par rapport à l'axe d'un embrayage à friction, caractérisé en ce que le point de pivotement est formé par un élément d'amortissement (29) en matière polymère coopérant par concordance de forme par une saillie (31) ou un évidement avec un évidement correspondant ou une saillie correspondante respectivement, du levier d'embrayage (5), et supportant de part et d'autre du point véritable de pivotement, le levier d'embrayage (5) sur une ligne droite à angle droit de son axe longitudinal.

6. Montage suivant la revendication 5, caractérisé en ce que l'élément d'amortissement (29) a, sur son côté faisant face au levier d'embrayage (5), une saillie additionnelle en forme de goujon (32), qui passe à travers un perçage (33) du levier d'embrayage (5).

EP 0 242 657 B1

Fig.1

Fig. 2

Fig. 3

Fig. 4

Fig. 5

Fig. 6

EP 0 242 657 B1

Fig. 7

Fig. 8

Fig. 9

Fig. 10

Fig. 11

Fig. 12